# EUROPEAN PATENT APPLICATION

(11) **EP 4 787 794 A1**
(43) Date of publication of application: **05.08.2026**
(21) Application number: 24881508.6
(22) Date of filing: 17.10.2024
(51) Int. Cl.: H04L 41/06

(54) **ALARM METHOD, APPARATUS AND SYSTEM**

(30) Priority: 24.10.2023 CN 202311387177
(71) Applicant: HUAWEI TECHNOLOGIES CO., LTD., Shenzhen, Guangdong 518129 (CN)
(72) Inventor: JIAO, Lijuan, Shenzhen, Guangdong 518129 (CN); GAO, Qiangzhou, Shenzhen, Guangdong 518129 (CN); LIU, Ye, Shenzhen, Guangdong 518129 (CN); XIE, Yuming, Shenzhen, Guangdong 518129 (CN); LIU, Zhu, Shenzhen, Guangdong 518129 (CN); JIAO, Xueli, Shenzhen, Guangdong 518129 (CN)
(74) Representative: Isarpatent
(86) International application number: PCT/CN2024/125492
(87) International publication number: WO 2025/087143

(57) **Abstract**

This application provides an alert method, apparatus, and system, relating to the field of network technologies. In the solutions provided in this application, after detecting an alert event based on a data flow that passes through a first device, the first device can encapsulate alert data of the alert event into a packet, and send the packet to a second device through which the data flow passes, where a flow identifier of the packet is consistent with a flow identifier of the data flow. After receiving the packet, the second device can perform threat detection and/or threat handling based on the alert data. In this way, the first device and the second device implement collaborative detection and/or handling on a threat entity. In addition, the first device can directly encapsulate the alert data into the packet and deliver the packet to the second device, that is, the alert data does not need to be detoured to a cloud platform for processing. Therefore, this effectively shortens time consumed for the threat detection and/or handling, and can ensure to block network attacks in time.

## Description

This application claims priority to Chinese Patent Application No. 202311387177.7, filed with the China National Intellectual Property Administration on October 24, 2023 and entitled "ALERT METHOD, APPARATUS, AND SYSTEM", which is incorporated herein by reference in its entirety.

### TECHNICAL FIELD

This application relates to the field of network technologies, and in particular, to an alert method, apparatus, and system.

### BACKGROUND

To ensure network security, network devices (for example, firewalls, switches, and routers) may perform threat detection on received data flows. If a malicious or suspicious network connection is detected, the network devices generate alert data, and report the alert data and metadata of the data flow to a cloud platform. A terminal device may also perform threat detection on log data collected by the terminal device. If detecting a malicious threat entity, the terminal device may perform threat handling (for example, process killing, file isolation, host isolation, or account removing) on the threat entity, and generates alert data. In addition, the terminal device may report the alert data and the log data to the cloud platform.

After receiving the data reported by the network devices and the terminal device, the cloud platform can perform data correlation on the received data, and can identify, through threat analysis, threat entities that the network device and the terminal device fails to block, and threat entities that were partially blocked but not fully eradicated. Then, the cloud platform may generate handling policies and deliver them to the terminal device and the network devices, to carry out threat handling.

However, in the foregoing method, the cloud platform needs to perform data correlation, threat analysis, and handling policy delivery. Such a process is time-consuming and cannot block network attacks in time.

### SUMMARY

This application provides an alert method, apparatus, and system, to resolve a technical problem that an alert method in related technologies is time-consuming and cannot block network attacks in time.

According to a first aspect, an alert method is provided. The method includes: A first device performs threat detection on a data flow that passes through the first device. The first device encapsulates alert data of an alert event into a packet if the alert event is detected based on the threat detection, and sends the packet to a second device through which the data flow passes. A flow identifier of the packet is consistent with a flow identifier of the data flow, and the alert data in the packet is used by the second device to perform threat detection and/or threat handling.

According to the method provided in this application, the first device and the second device implement collaborative detection and/or handling on a threat entity. In addition, the first device can directly encapsulate the alert data into the packet and deliver the packet to the second device, that is, the alert data does not need to be detoured to a cloud platform for processing. Therefore, this effectively shortens time consumed for the threat detection and/or handling, can ensure to block network attacks in time, and can effectively reduce a waste of compute resources of the cloud platform.

Optionally, the packet may belong to the data flow. In other words, the first device may send the alert data with the flow. Alternatively, the packet may be a packet in a reverse data flow of the data flow. A source address of the reverse data flow is the same as a destination address of the data flow, and a destination address of the reverse data flow is the same as a source address of the data flow.

It can be learned that the first device may reuse a protocol channel between the first device and the second device to send the alert data. Therefore, when the second device performs correlation on the alert data, the correlation is not affected by a deployment location of a network address translation (network address translation, NAT) device, and application flexibility of this solution is high.

Optionally, if the data flow passes from the first device through the second device, the packet may belong to the data flow; or if the data flow passes from the second device through the first device, the packet may be the packet in the reverse data flow of the data flow.

In other words, if a flow direction of the data flow is the same as a sending direction of the alert data, the first device may encapsulate and send the alert data with the flow; or if a flow direction of the data flow is opposite to a sending direction of the alert data, the first device may encapsulate and send the alert data by using a packet in the reverse data flow.

Optionally, the packet in the reverse data flow may be a response packet of the packet in the data flow. The response packet may be a packet generated in response to a packet in the data flow.

Optionally, the response packet may be received by the first device. In other words, the response packet is generated by another device (for example, an attacker) and sent to the second device. Alternatively, the response packet may be generated by the first device. In other words, the first device may actively construct a response packet to encapsulate the alert data, to ensure that the second device can perform, based on the alert data, threat detection and/or threat handling in time.

Optionally, the first device may be a network device, and the second device may be a terminal device; both the first device and the second device may be terminal devices; or the first device may be a terminal device, and the second device may be a network device. The network device may be a device like a router, a switch, or a firewall, and the terminal device may be a personal computer (personal computer, PC), a workstation (workstation), a server (server), or the like.

Optionally, if the first device is the network device, the data flow may be received by the first device. For example, the data flow may be sent by the attacker to the second device through the first device, or may be sent by the second device to the attacker or another terminal device through the first device. If the first device is the terminal device, the data flow may be received or initiated by the first device. For example, if the first device has been intruded by the attacker, the first device may initiate the data flow to the attacker or another terminal device, and the first device may perform threat detection on the initiated data flow.

Optionally, the alert data may include at least one of the following data: a class of an attack scenario of the alert event; confidence of the alert event; a risk score of the attack scenario; a handling action performed by the first device on the alert event; a rule number of a detection rule for detecting the alert event; a first handling policy to be executed by the second device; a correlation type, where the correlation type indicates a manner of correlating the alert data to a process call chain of the second device; and a correlation value corresponding to the correlation type.

The class of the attack scenario may include: a Trojan (Trojan), a backdoor (backdoor) virus, a worm (worm), a virus (virus), a botnet (botnet), information disclosure (info-disclosure), code execution (code-execution), buffer overflow (overflow), and the like. Value ranges of the confidence and the risk score may both be from 60 to 100. The handling action may be alerting (alert) or blocking (block). The first handling policy may include alerting (alert) or host isolation (isolate host), and the correlation type may include a process (process), file md5, a file name, a command (command), content (content), and the like. md5 refers to message-digest algorithm (message-digest algorithm) version 5. In addition, the file md5, the file name, the command, and the content have corresponding correlation values.

Optionally, the packet is an internet protocol version 6 (Internet protocol version 6, IPv6) packet, and the alert data may be encapsulated in a destination options header (destination options header, DOH) of the IPv6 packet.

Optionally, if the second device is the terminal device and is a destination node of a packet, the second device may directly obtain and process the alert data in the DOH. If the second device is the network device, the IPv6 packet may further include a segment routing header (segment routing header, SRH), a segment list (segment list) of the SRH may include a segment identifier (segment identifier, SID) of the second device, and the SID may indicate the second device to obtain and process the alert data in the DOH.

Optionally, a process in which the first device encapsulates the alert data of the alert event into the packet if the alert event is detected based on the threat detection may include: The first device encapsulates the alert data of the alert event into the packet if the alert event is detected based on the threat detection, and the data flow and the alert event meet a collaborative handling condition.

The first device encapsulates and sends the alert data only after it is determined that the data flow and the alert event meet the collaborative handling condition, so that device performance is not affected due to frequent sending of the alert data.

In a first optional implementation, the collaborative handling condition may include a first condition and a second condition. The first condition includes: A source address of the data flow belongs to an untrusted zone. The second condition includes at least one of the following conditions: The alert event is suspicious file type inconsistency; the alert event is a suspicious alert event, where confidence of the alert event is higher than a first threshold, and the data flow includes an executable file; and the alert event is a suspicious attack and intrusion event, where confidence of the alert event is higher than a second threshold.

The first threshold may be less than the second threshold. For example, the first threshold may be 70, the second threshold may be 80, and the executable file may include an executable (executable, EXE) file, a dynamic link library (dynamic link library, DLL) file, a hypertext preprocessor (hypertext preprocessor, PHP) file, and the like. In the first implementation, the data flow comes from the untrusted zone. This may correspond to an attack and intrusion scenario.

In a second optional implementation, the collaborative handling condition may include a first condition and a second condition. The first condition includes: Both a source address and a destination address of the data flow belong to a trusted zone. The second condition includes: The alert event is suspicious service message block (server message block, SMB) sharing, suspicious high-risk vulnerability exploitation, or suspicious remote desktop protocol (remote desktop protocol, RDP) desktop transmission, where confidence of the alert event is higher than a third threshold.

The third threshold may be greater than the first threshold. For example, the third threshold may be 80. In the second implementation, both the source address and the destination address of the data flow belong to the trusted zone. This may correspond to an internal network lateral movement scenario.

In a third optional implementation, the collaborative handling condition may include a first condition and a second condition. The first condition includes: A source address of the data flow belongs to a trusted zone, and a destination address of the data flow belongs to an untrusted zone. The second condition includes at least one of the following conditions: The alert event is a malicious domain connection, malicious command and control (command and control, C&C) communication, or malicious file download, where confidence of the alert event is higher than a fourth threshold; the alert event is a suspicious domain generation algorithm (domain generation algorithm, DGA) request, suspicious C&C communication, or suspicious file download, where confidence of the alert event is higher than a fifth threshold; a process or a parent process that initiates the data flow is a suspicious process; and the alert event is a suspicious abnormal connection event caused by successful vulnerability exploitation, where confidence of the alert event is higher than a sixth threshold.

The fourth threshold may be a threshold corresponding to a blocking alert. For example, the fourth threshold may be 95. The fifth threshold and the sixth threshold may be less than the fourth threshold. For example, the fifth threshold may be 75, and the sixth threshold may be 70 or 75. In the third implementation, the source address of the data flow belongs to the trusted zone, and the destination address belongs to the untrusted zone. This may correspond to a compromised external communication scenario.

Optionally, the method may further include: The first device receives a second handling policy sent by the second device, where the second handling policy is generated after the second device detects a threat entity based on the alert data; and the first device executes the second handling policy.

If the first device is the network device, and the second device is the terminal device, or if both the first device and the second device are terminal devices, the second handling policy may include: blocking a source IP address of the data flow, and/or performing host isolation on the second device. If the first device is the terminal device, and the second device is the network device, the second handling policy may include host isolation and/or a collaborative detection policy. The collaborative detection policy is to be executed by the first device, so that the second device can collaborate with the first device, to detect and eradicate the threat entity in the first device.

According to a second aspect, an alert method is provided. The method includes: A second device receives a packet from a first device, where alert data is encapsulated in the packet. The second device performs threat detection and/or threat handling based on the alert data. The alert data is obtained by the first device by performing threat detection on a data flow that passes through the first device, the data flow further passes through the second device, and a flow identifier of the packet is consistent with a flow identifier of the data flow.

Optionally, the second device is a terminal device, and a process in which the second device performs threat detection and/or threat handling based on the alert data may include: The second device determines a process call chain that is in the second device and that is correlated to the alert data, and performs threat detection and/or threat handling based on the process call chain.

Optionally, the alert data may include a correlation type. A process in which the second device determines the process call chain that is in the second device and that is correlated to the alert data may include: The second device determines, based on the correlation type, the process call chain that is in the second device and that is correlated to the alert data.

Optionally, the second device is a network device, and the first device is a terminal device. Correspondingly, a process in which the second device performs threat detection and/or threat handling based on the alert data may include: The second device determines correlated data that is in the second device and that is correlated to the first device, and performs threat detection and/or threat handling based on the alert data and the correlated data. The correlated data may include other alert data and/or log data.

Optionally, the alert data may further include a first handling policy, and the method may further include: The second device executes the first handling policy.

Optionally, the method may further include: The second device sends a second handling policy to the first device if a threat entity is detected based on the alert data, where the second handling policy is to be executed by the first device.

According to a third aspect, an alert apparatus is provided. The alert apparatus may include at least one module, and the at least one module may be configured to implement the alert method provided in the first aspect or the second aspect.

According to a fourth aspect, an alert apparatus is provided. The alert apparatus includes a processor and a memory. The processor is configured to execute instructions stored in the memory, to implement the alert method provided in the first aspect or the second aspect.

According to a fifth aspect, a computer-readable storage medium is provided. The computer-readable storage medium stores a computer program, and when the computer program is executed, the alert method provided in the first aspect or the second aspect is implemented.

According to a sixth aspect, a computer program product is provided. The computer program product includes a program or code, and when the program or the code is executed, the alert method provided in the first aspect or the second aspect is implemented.

According to a seventh aspect, an alert system is provided. The alert system includes a first device and a second device, the first device is configured to perform the method provided in the first aspect, and the second device is configured to perform the method provided in the second aspect.

Optionally, the system may further include a cloud platform, and the cloud platform may be a public cloud platform or a private cloud platform. The first device and the second device may further report data to the cloud platform. The cloud platform may perform threat analysis based on the received data, and separately deliver a handling policy to the first device and the second device. The data reported by the first device and the second device may include at least one of the following: alert data, metadata of traffic data, log data, a threat handling result, and the like.

In conclusion, this application provides an alert method, apparatus, and system. In the solutions provided in this application, after a first device performs threat detection on a received data flow, if an alert event is detected, the first device can encapsulate alert data of the alert event into a packet, and send the packet to a second device. The second device can correlate the alert data to a process call chain, and perform threat detection and threat handling based on the process call chain. In this way, the first device and the second device implement collaborative detection and handling on a threat entity. In addition, the first device can directly encapsulate the alert data into the packet and deliver the packet to the second device, that is, the alert data does not need to be detoured to a cloud platform for processing. Therefore, this effectively shortens time consumed for the threat detection and handling, can ensure to block network attacks in time, and can effectively reduce a waste of compute resources of the cloud platform.

### BRIEF DESCRIPTION OF DRAWINGS

FIG. 1 is a diagram of an application scenario of an alert method according to an embodiment of this application;
FIG. 2 is a diagram of an application scenario of another alert method according to an embodiment of this application;
FIG. 3 is a schematic flowchart of an alert method according to an embodiment of this application;
FIG. 4 is a diagram of an implementation of an alert method according to an embodiment of this application;
FIG. 5 is a diagram of an implementation of another alert method according to an embodiment of this application;
FIG. 6 is a diagram of a structure of an IPv6 packet according to an embodiment of this application;
FIG. 7 is a diagram of a structure of a DOH according to an embodiment of this application;
FIG. 8 is a diagram of a structure of an options field according to an embodiment of this application;
FIG. 9 is a diagram of an encapsulation format of alert data according to an embodiment of this application;
FIG. 10 is a diagram of a structure of an SRv6 packet according to an embodiment of this application;
FIG. 11 is a diagram of a structure of an alert apparatus according to an embodiment of this application;
FIG. 12 is a diagram of a structure of another alert apparatus according to an embodiment of this application; and
FIG. 13 is a diagram of a structure of still another alert apparatus according to an embodiment of this application.

### DESCRIPTION OF EMBODIMENTS

The following describes in detail an alert method, apparatus, and system provided in embodiments of this application with reference to the accompanying drawings. To make the technical solutions provided in embodiments of this application clearer, before the technical solutions provided in embodiments of this application are specifically described, related terms are first explained.

Ransomware: It is malware that encrypts a file or system of a user and then demands a ransom from the user in exchange for a decryption key or restoring system access permission. The ransomware is usually spread through email, brute-force cracking, a network vulnerability, and the like. Once the system of the user is infected, the ransomware displays a warning window asking the user to pay a ransom. Otherwise, the file or system of the user is to be locked permanently.

Data exfiltration: It is a process in which sensitive data is leaked to unauthorized personnel, organizations, or websites without authorization or permission. The sensitive data may include personal information, financial information, business secrets, intellectual property rights, network information, and the like. Data exfiltration may cause personal privacy leakage, financial loss, business reputation damage, and the like. Therefore, it is very important to protect data security and privacy.

Cryptominer: It is malware that exploits computational power of an infected computer to mine cryptocurrency for profit. The cryptominer is usually installed on a computer without awareness of a user and uses central processing unit (central processing unit, CPU) or graphics processing unit (graphics processing unit, GPU) resources of the computer to perform cryptomining operations. Because cryptomining requires a large amount of computational power, the cryptominer may cause the computer to become very slow or even cause a system to crash. In addition, the cryptominer may increase electricity costs, as the cryptominer consumes a large quantity of electricity resources.

Remote access Trojan: It is also referred to as remote control software, which can remotely control an infected computer without authorization. An attacker may steal sensitive information on the infected computer, monitor a user activity, and manipulate a computer operation by using the remote access Trojan. The remote access Trojan is usually spread through email, a malicious website, file sharing, and the like. Once a computer is infected, the remote access Trojan runs in the background and is not easily perceived by users.

Zero-day (0-day) vulnerability: It indicates a security vulnerability that has not been discovered or disclosed. Therefore, no known solution or patch can be used to fix the vulnerability. These vulnerabilities are often exploited by a hacker or an attacker, to obtain unauthorized access permission or execute malicious code. These vulnerabilities have not been discovered or disclosed, posing a great threat to security of a system and an application.

Compromised host (also referred to as a compromised device): It indicates a computer system that has been attacked and intruded by a hacker. The hacker may intrude the computer system in various manners, for example, exploiting a vulnerability, malware, and social engineering. Once the hacker intrudes the computer system, the hacker may execute malicious code, steal sensitive information (for data exfiltration or lateral movement), damage the system (for ransomware or data erasing), and so on. The compromised host is a severe security threat to both an individual and an organization, because the hacker can use the compromised host to attack another computer or use the compromised host to ransom.

Metadata (metadata): It refers to some metadata information of network traffic recorded in a network communication process, for example, a source internet protocol (Internet protocol, IP) address, a destination IP address, a protocol type, a port number, a data packet size, and a time stamp. The metadata information may be used for network traffic analysis, security monitoring, network performance optimization, and/or the like. The metadata information may include a network layer 3/4 information element and an application-protocol information element.

Network attacks such as ransomware, data exfiltration, a distributed denial of service attack (distributed denial of service attack, DDOS), a 0-day vulnerability, cryptominer, and a remote access Trojan have always been key pain points of enterprise security. An entire attack chain of a network attack may generally be divided into several steps, such as attack and intrusion (for example, vulnerability exploitation, scanning, and brute-force cracking), attack vector delivery and execution, external C&C communication, target execution (for example, ransomware, cryptomining, a DDOS, and data exfiltration), and lateral movement. Currently, an attack speed of an attacker is increasing. Once a vulnerability is exposed (about 15 minutes), scanning starts. 80% of ransomware samples start encryption within 5 minutes after running, and an encryption speed is higher than 30 Mbit/s (Mb/S). For these network attacks, high-precision attack analysis needs to be performed at an early stage of the entire attack chain, a compromised device and a threat entity on the device need to be identified, and attack eradication needs to be performed, to mitigate a risk and win time for attack fixing and attack eradication.

In the foregoing attack scenario, the attack and intrusion phase, external C&C communication, malicious sample download, data exfiltration, lateral movement, and the like are at the forefront of the entire attack chain and are indispensable. Most network security vendors discover a compromised host through a malicious connection and collaborate with a terminal device to perform malicious attack eradication.

To ensure network security, after receiving a data flow, a network device (for example, a firewall, a switch, or a router) may block a malicious network connection or discover a suspicious network connection in threat detection manners such as intrusion prevention system (intrusion prevention system, IPS) rule matching, threat intelligence matching, and/or artificial intelligence (artificial intelligence, AI) model prediction, and generate alert data. Then, the network device may send metadata generated from an original data flow, or filtered metadata, and the alert data to a public or private cloud platform.

The terminal device can collect log data, and perform threat detection in a plurality of manners such as host IPS (host IPS, HIPS) rule matching, intelligence matching, AI model prediction, user and entity behavior analytics (user and entity behavior analytics, UEBA), and/or graph inference. For a threat entity determined to be malicious, the terminal device may perform threat handling, for example, process killing (kill), file isolation, and/or account removing, on the threat entity, and send original log data collected by the terminal device, or filtered log data, and alert data to the public or private cloud platform. The terminal device may be a PC, a workstation, a server, or the like.

After receiving the traffic metadata and the alert data from the network device, and the log data and the alert data from the terminal device, the public or private cloud platform can perform data correlation based on unified assets, and perform threat analysis based on rule matching, intelligence matching, graph inference, and/or AI inference. In addition, the cloud platform can effectively discover a terminal device on which an attack that cannot be blocked by the network device and the terminal device is located, a threat entity corresponding to the attack, and a threat entity that is not completely eradicated on the network device and the terminal device. The cloud platform can further generate a handling policy and deliver the handling policy to the terminal device and the network device, so that the two devices can execute the handling policy. For example, the network device executes policies such as host isolation and network segment access restriction, and the terminal device executes policies such as file isolation, process killing, and port blocking.

However, in the foregoing solution, a process from detection of a malicious connection by the network device to delivery of a handling policy to the terminal device passes through an offline detour via the public or private cloud platform, where data correlation, threat analysis, and handling policy delivery need to be performed on the public or private cloud platform. As a result, overall time consumption is at least 10s, and continuation of a malicious attack on the terminal device may lead to significant harm, such as a ransomware attack, a DDoS, data exfiltration, and worm propagation.

In addition, after the alert data generated by the network device is sent to the cloud platform, asset correlation needs to be performed between the alert data and the log data and the alert data that are sent by the terminal device, to perform further threat analysis. This process wastes compute resources of the cloud platform. In addition, if a NAT device is located between a firewall and the terminal device, the cloud platform further needs to obtain NAT logs, to convert a public network address of a data flow corresponding to a threat detected by the network device (for example, the firewall) into an internal network address, and then correlate the internal network address to the data flow reported by the terminal device. Therefore, a process of tracing the alert data generated by the network device to the terminal device is complex due to a networking topology.

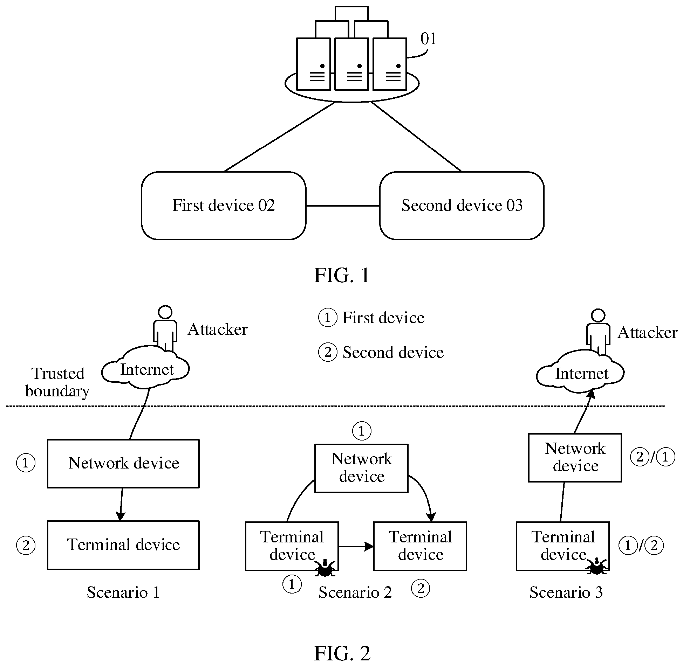

FIG. 1 is a diagram of an application scenario of an alert method according to an embodiment of this application. As shown in FIG. 1, the application scenario may include a cloud platform 01, a first device 02, and a second device 03. The cloud platform 01 may be a server cluster including a plurality of servers, and the cloud platform 01 may be a public cloud platform or a private cloud platform. The first device 02 may be a network device, and the second device 03 may be a terminal device; both the first device 02 and the second device 03 may be terminal devices; or the first device 02 may be a terminal device, and the second device 03 may be a network device. The network device may be a firewall, a router, a switch, or the like, and the terminal device may be a PC, a workstation, a server, or the like.

FIG. 2 is a diagram of an application scenario of another alert method according to an embodiment of this application. As shown in FIG. 2, the alert method may be applied to three different scenarios, where a scenario 1 is an attack and intrusion scenario, a scenario 2 is an internal network lateral movement scenario, and a scenario 3 is a compromised external communication scenario. A trusted boundary in FIG. 2 is a network boundary between a trusted zone (for example, an enterprise intranet) and an untrusted zone (for example, a public network).

In the attack and intrusion scenario shown in the scenario 1, a hacker or an attacker in the untrusted zone initiates, via a network device, a connection to a terminal device in the trusted zone. Correspondingly, in the attack and intrusion scenario, the first device 02 may be the network device, and the second device 03 may be the terminal device.

In the internal network lateral movement scenario shown in the scenario 2, a terminal device (which may also be referred to as a compromised terminal device or a compromised host) that has been intruded by an attacker performs lateral penetration on another terminal device in the trusted zone. In the lateral penetration scenario, the first device 02 may be the terminal device that has been intruded by the attacker, or may be a network device connected to the terminal device, and the second device 03 may be another terminal device in the trusted zone.

In the compromised external communication scenario shown in the scenario 3, a terminal device that has been intruded by an attacker initiates, via a network device, a connection to the attacker in the untrusted zone, to request more information (for example, an instruction for requesting a next attack action) or send data externally. In the compromised external communication scenario, the first device 02 may be the terminal device that has been intruded by the attacker, and the second device 03 may be the network device. Alternatively, the first device 02 may be the network device, and the second device 03 may be the terminal device.

In this embodiment of this application, the first device 02 can perform threat detection on a data flow that passes through the first device. If an alert event is detected, the first device 02 encapsulates alert data of the alert event into a packet, and sends the packet to the second device 03 through which the data flow passes. A flow identifier of the packet is consistent with a flow identifier of the data flow. The second device 03 can perform threat detection and/or threat handling based on the alert data in the packet. The flow identifier of the packet carrying the alert data is consistent with the flow identifier of the data flow in which the alert event is detected. In other words, the alert data is directly carried in the packet in the data flow or a packet in a reverse data flow of the data flow. In this way, the second device can quickly obtain the alert data obtained by the first device, and the first device 02 and the second device 03 implement collaborative detection and/or handling on a threat entity. In addition, the alert data does not need to be detoured to a cloud platform for processing. Therefore, this effectively shortens time consumed for the threat detection and/or handling, and effectively reduces a waste of processing resources of the cloud platform. In other words, in the solution provided in this embodiment of this application, the two devices can collaborate with each other in a simple and low-cost manner, to efficiently and quickly perform threat detection and/or threat handling.

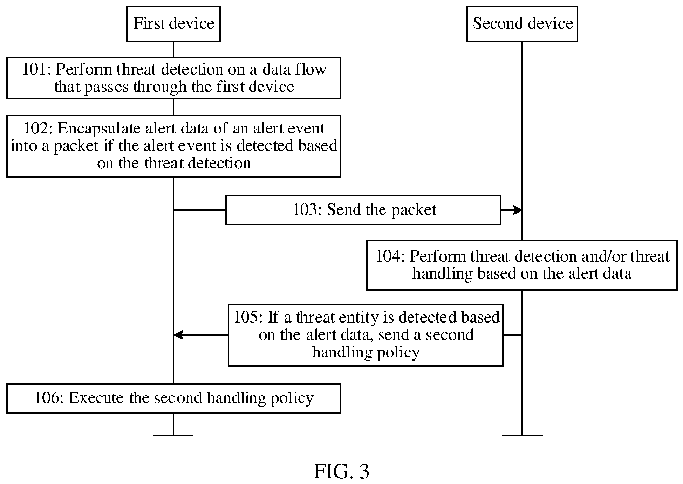

FIG. 3 is a flowchart of an alert method according to an embodiment of this application. The method may be applied to the application scenarios shown in FIG. 1 or FIG. 2. As shown in FIG. 3, the method includes the following steps.

Step 101: A first device performs threat detection on a data flow that passes through the first device.

In this embodiment of this application, a detection module (for example, an intrusion prevention engine) is deployed in the first device, and the first device can perform, by using the detection module, threat detection on the data flow that passes through the first device. The threat detection may also be referred to as threat matching or threat analysis.

If the first device is a network device, the data flow that passes through the first device may be a data flow received by the first device. For example, in the scenario 1 shown in FIG. 2, the network device can receive a data flow (for example, a request flow) sent by an attacker to a terminal device, and may perform threat detection on the data flow. In the scenario 2, the network device can receive a data flow (for example, a request flow) sent by a compromised terminal device to another terminal device, and may perform threat detection on the data flow. In the scenario 3, the network device can receive a data flow (for example, a request flow) sent by a compromised terminal device to an attacker, and may perform threat detection on the data flow.

If the first device is a terminal device, the data flow that passes through the first device may be a data flow received by the first device, or may be a data flow actively initiated by the first device. For example, in the scenario 2 shown in FIG. 2, a compromised terminal device may initiate a data flow (for example, a request flow) to another terminal device in a network, and may perform threat detection on the initiated data flow. In the scenario 3, a compromised terminal device can initiate a data flow (for example, a request flow) to an attacker, and may perform threat detection on the initiated data flow. In the scenario 2, a compromised terminal device may further receive a data flow sent by another device (for example, an attacker), and may perform threat detection on the received data flow.

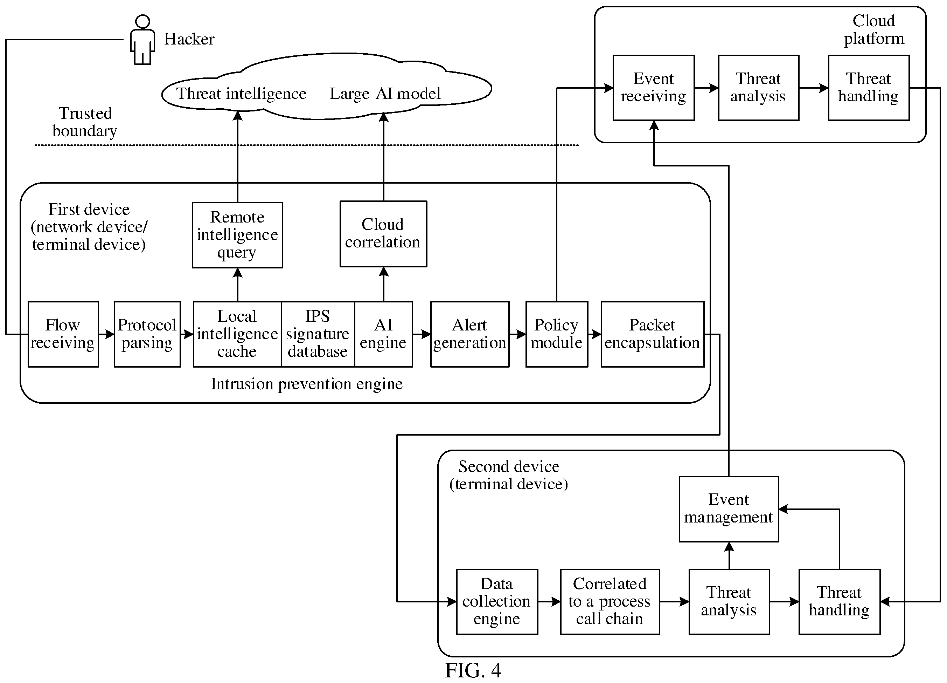

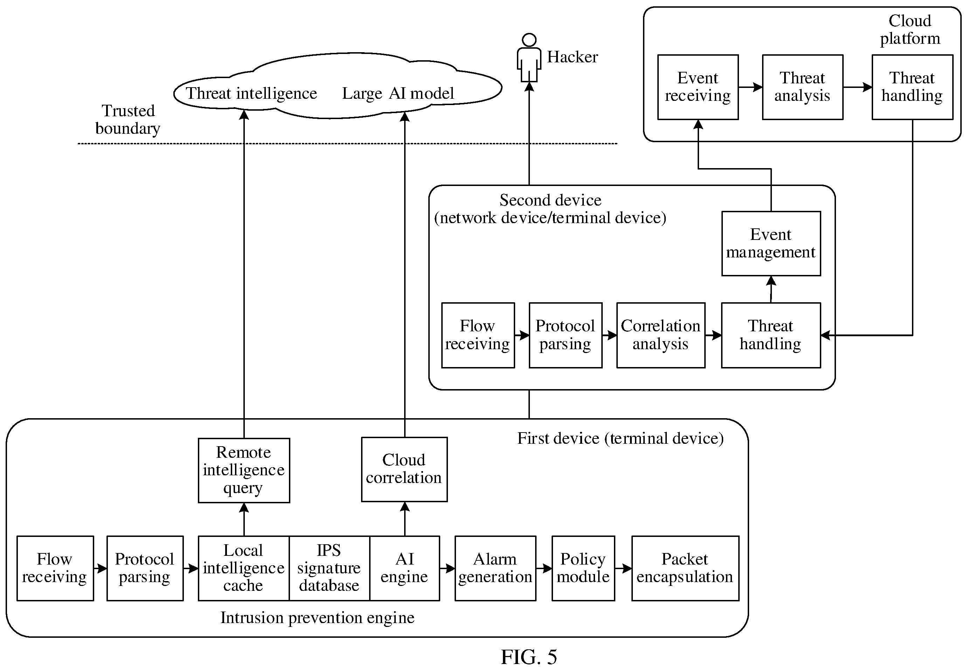

Optionally, a threat detection manner may include at least one of manners such as rule matching, intelligence matching, and AI model prediction. If the first device is a terminal device, the threat detection manner may further include UEBA, graph inference, and the like. For example, refer to FIG. 4 and FIG. 5. An intrusion prevention engine is deployed in the first device. After obtaining a data flow that passes through the first device, the first device may first perform protocol parsing on the data flow, and then perform threat detection on the data flow via the intrusion prevention engine. The intrusion prevention engine can identify a suspicious or malicious data flow through threat intelligence matching, signature database (that is, an IPS or HIPS rule) matching, and AI engine matching.

It can be learned from FIG. 4 and FIG. 5 that, when performing threat intelligence matching, the intrusion prevention engine may first perform local cache matching, to be specific, may match the data flow with locally cached threat intelligence. If local cache matching misses, remote intelligence query may be performed and a query result (to be specific, threat intelligence matched from a cloud) is cached locally. In addition, when performing threat detection via an AI engine, the intrusion prevention engine may use a local small model for threat detection, or may collaborate with a large AI model on the cloud for threat detection. The small AI model locally stored in the first device may be obtained through compression and pruning on the large AI model on the cloud.

Step 102: The first device encapsulates alert data of an alert event into a packet if the alert event is detected based on the threat detection.

A flow identifier of the packet is consistent with a flow identifier of the data flow. The flow identifier is used to identify the data flow. For example, the flow identifier may be tuple information, and the tuple information is, for example, five-tuple information. The five-tuple information includes a source internet protocol (Internet protocol, IP) address, a source port, a destination IP address, a destination port, and a transport layer protocol. That the flow identifier of the packet is consistent with the flow identifier of the data flow may mean that the flow identifier of the packet is the same as the flow identifier of the data flow, or the flow identifier of the packet is the same as a flow identifier of a reverse data flow of the data flow. For example, a device 1 and a device 2 exchange packets, the device 1 sends a packet to the device 2 through a data flow 1, and the device 2 sends a packet to the device 1 through a data flow 2. A source address in a flow identifier of the data flow 1 is the same as a destination address in a flow identifier of the data flow 2, and a destination address in the flow identifier of the data flow 1 is the same as a source address in the flow identifier of the data flow 2. In this case, the data flow 2 is referred to as a reverse data flow of the data flow 1, and the data flow 1 is a reverse data flow of the data flow 2. In other words, that the flow identifier of the packet is the same as the flow identifier of the reverse data flow of the data flow may be: A source address and a destination address in the flow identifier of the packet are opposite to a source address and a destination address of the data flow. To be specific, the source address of the packet is the same as the destination address of the data flow, and the destination address of the packet is the same as the source address of the data flow.

In this embodiment of this application, the packet may belong to the data flow. To be specific, the first device may directly encapsulate the alert data into the packet in the data flow that passes through the first device, that is, the first device may send the alert data along with the flow. Alternatively, the packet may be a packet in the reverse data flow of the data flow. In other words, the first device does not need to change content of the packet in the data flow, and may encapsulate the alert data into the packet in the reverse data flow. The packet in the reverse data flow may also be referred to as a reverse packet. A source address of the reverse data flow is the same as a destination address of the data flow, and a destination address of the reverse data flow is the same as a source address of the data flow.

Optionally, if the packet is the packet in the reverse data flow, the packet may be any packet in the reverse data flow received by the first device. For example, the any packet is a packet in a reverse data flow received by the first device when an alert event is detected.

Optionally, if the packet is the packet in the reverse data flow, the packet may be a packet actively constructed by the first device. For example, the first device actively constructs a TCP reset (reset, RST) packet, and includes alert data in the TCP RST packet. A source address of the actively constructed packet is the same as a destination address of the data flow in which the alert event is detected.

Optionally, if the packet is the packet in the reverse data flow, the packet may be a response packet of the packet in the data flow. The response packet may be a packet triggered by the packet in the data flow. For example, using the Transmission Control Protocol (transmission control protocol, TCP) as an example, the packet in the data flow may be a synchronization (synchronize, SYN) packet, and the response packet may be an acknowledgment (acknowledge, ACK) packet. Alternatively, the packet in the data flow may be an ACK packet, and the response packet may be another ACK packet used to respond to the ACK packet or a data packet that is triggered by the ACK packet for sending. Alternatively, the packet in the data flow may be a data packet, and the response packet may be an ACK packet. Alternatively, the packet in the data flow may be a data packet, and the response packet may also be a data packet. A type of the response packet is not limited in this embodiment of this application, and it only needs to be ensured that the response packet is a packet that is triggered by the packet in the data flow and that is used to respond to the packet.

In this embodiment of this application, the response packet may be a response packet that is sent by another device and that is received by the first device. In other words, after detecting an alert event, the first device encapsulates alert data into the received response packet. Alternatively, the response packet may be generated by the first device. In other words, after detecting an alert event, the first device may actively construct a response packet to encapsulate alert data.

It may be understood that, if the data flow passes through a second device from the first device, the packet may be a packet in the data flow. In other words, the first device may directly encapsulate the alert data into the packet in the data flow sent by the first device to the second device. If the data flow passes from the second device through the first device, the packet may be a packet in a reverse data flow of the data flow. In other words, the second device may encapsulate the alert data into the packet in the received reverse data flow or in the constructed reverse packet.

For example, in the scenario 1 and the scenario 2 shown in FIG. 2, a data flow flows from the first device to the second device, and the first device may directly encapsulate alert data into a packet in the data flow. Alternatively, in the scenario 3, if the first device is the terminal device and the second device is the network device, the first device may directly encapsulate alert data into a packet in a data flow initiated by the first device.

In the scenario 3 shown in FIG. 2, if the first device is the network device and the second device is the terminal device, after performing threat detection on a data flow sent by the second device, the first device may encapsulate alert data into a packet in a received reverse data flow that is sent by the attacker and that is sent to the second device. Alternatively, the first device may actively construct a response packet sent to the second device, to encapsulate the alert data. A source address of the actively constructed response packet is the same as a destination address of the data flow in which the alert event is detected.

Optionally, the alert data encapsulated by the first device into the packet may include at least one of the following:
1. Class (class) of an attack scenario of the alert event. This may also be referred to as a threat type. The threat type may include a Trojan (Trojan), a backdoor (backdoor) virus, a worm (worm), a virus (virus), a botnet (botnet), information disclosure (info-disclosure), code execution (code-execution), buffer overflow (overflow), and the like.
2. Confidence (confidence) of the alert event. A value range of the confidence may be from 60 to 100, and the value range may be divided into a plurality of levels, for example, may be divided into four levels: extremely high, high, medium, and low.
3. Risk (risk) score of the attack scenario. A value range of the risk score may be from 60 to 100, and the value range may be divided into a plurality of levels, for example, may be divided into four levels: critical, high-risk, medium-risk, and low-risk.
4. Handling action (action) performed by the first device on the alert event. The handling action may include alerting (alert) and blocking (block). A value of alerting may be 0, and a value of blocking may be 1.
5. Rule number of a detection rule for detecting the alert event. The rule number can also be referred to as a threat identifier (threat ID).
6. First handling policy (response) to be executed by the second device. The first handling policy may include alerting (alert) and host isolation (isolate host), where a value of alerting may be 0, and a value of host isolation may be 1.
7. Correlation type (correlate type). The correlation type indicates a manner of correlating the alert data to a process call chain of the second device, and may include no more than 32 optional manners: a process (process), file md5 (file_md5), a file name (file_name), a command (command), a user name (user_name), an asset identifier (asset_id), content (content), and the like.
8. Correlation value (correlate_value) corresponding to the correlation type. A length of the correlation value may be 64 bytes (byte), and the correlation value may include md5, file_name, command, user_name, asset_id, content, and the like.

The correlation type and the correlation value may be determined based on a triggering manner of the alert event. For example, if the alert event is triggered by a suspicious or malicious file, for example, the alert event in the scenario 1 is "suspicious file type inconsistency", or the alert event in the scenario 3 is "malicious file download", the correlation type may include the file md5 and/or the file name. If the alert event is triggered by a suspicious or malicious network connection, for example, the alert event in the scenario 1 is "a suspicious attack and intrusion event", or the alert event in the scenario 3 is "a malicious domain connection", the correlation type may be the process. If the alert event is triggered by a suspicious or malicious command, for example, the alert event in the scenario 3 is "malicious C&C communication" or "suspicious C&C communication", the correlation type may be the command. If the alert event is triggered by suspicious or malicious content, for example, the alert event in the scenario 2 is "suspicious SMB sharing" or "suspicious RDP desktop transmission", the correlation type may be the content. If the alert event is triggered by a terminal device, for example, the alert event in the scenario 3 is "a suspicious abnormal connection event caused by successful vulnerability exploitation", the correlation type may be the user name or the asset identifier.

Step 103: The first device sends the packet to the second device through which the data flow passes.

After the alert data is encapsulated in the packet, the first device may send the packet to the second device through which the data flow passes. The alert data in the packet may be used by the second device to perform threat detection and/or threat handling. Because the flow identifier of the packet is consistent with the flow identifier of the data flow, the foregoing step 103 may also be understood as follows: The first device can reuse a protocol channel between the first device and the second device for alert data transmission. In view of this, the second device can directly perform correlation (for example, correlation to a process call chain, or correlation to other alert data and log data) on the alert data. The correlation process is not affected by a NAT deployment location, and application flexibility of the correlation process is high.

In a scenario in which the first device encapsulates alert data into a packet in a data flow or encapsulates alert data into a packet (for example, a response packet) in a received reverse data flow, because a process of encapsulating the alert data delays packet sending, the second device performs an attack action based on information carried in the packet only after receiving the packet. For example, a threat entity in the second device needs to determine a next attack action based on content of the response packet. Therefore, this solution can also delay execution of an attack, gaining time for defense.

Optionally, in the scenario 1 shown in FIG. 2, after detecting an alert event, the network device may further send a blocking packet to an attacker; and in the scenario 2 and the scenario 3 shown in FIG. 2, after detecting an alert event, the network device may further send a blocking packet to a compromised terminal device. The blocking packet may be a TCP reset (reset) packet.

Step 104: The second device performs threat detection and/or threat handling based on the alert data.

In this embodiment of this application, after receiving the packet sent by the first device, the second device may parse the packet to obtain the alert data encapsulated by the first device. For example, the packet in which the alert data is encapsulated may be an IPv6 packet, and the alert data may be encapsulated in an extension header of the IPv6 packet. The second device may parse an IP layer of the IPv6 packet to obtain the alert data. Then, the second device may perform threat detection and/or threat handling based on the alert data.

It may be understood that the second device may first perform threat detection based on the alert data, and if a threat entity is detected, the second device may perform threat handling on the threat entity. If no threat entity is detected, the second device does not need to perform threat handling. Alternatively, after obtaining the alert data, the second device may directly perform threat handling based on the alert data. For example, if the alert data includes a first handling policy, the second device may directly execute the first handling policy.

Optionally, the second device may determine, based on confidence in the alert data, whether threat detection needs to be performed first. If the confidence is less than a threshold, the second device may first perform threat detection based on the alert data, and then determine, based on a detection result, whether to perform threat handling. If the confidence is higher than the threshold, the second device may directly perform threat handling. For example, in the scenario 3 shown in FIG. 2, if confidence in the alert data sent by the network device to the terminal device is greater than a threshold, the terminal device may determine that the terminal device has been compromised. In this case, if a process call chain correlated by the terminal device by using the alert data is a threat entity that can be directly handled, the terminal device may directly perform threat handling on the threat entity. The terminal device may be preconfigured with a condition that needs to be met by the threat entity that can be directly handled. For example, the condition may include: The threat entity is a file correlated to an external process, or a file that is correlated to an external process and that has no trusted signature.

In this embodiment of this application, if the second device is the network device, a threat handling manner may include at least one of the following: session blocking, host isolation, network segment access restriction, and the like. If the second device is the terminal device, a threat handling manner may include at least one of the following: process killing, file isolation, infected file recovery, account removing, port blocking, host micro-segmentation, and the like.

In a first optional implementation, the second device may be a terminal device, for example, may be a PC, a workstation, or a server. As shown in FIG. 4, the second device can determine a process call chain that is in the second device and that is correlated to the alert data. In other words, the second device may correlate the alert data to the process call chain in the second device. Then, the second device may perform threat detection and/or threat handling based on the correlated process call chain. For example, the second device may perform threat detection and/or threat handling based on the alert data and the correlated process call chain.

Optionally, the second device may determine, based on a correlation manner indicated by a correlation type field in the alert data, and a correlation value of the correlation manner, the process call chain correlated to the alert data. For example, if the correlation type is a process, the second device may directly determine that the correlated process call chain is a process call chain corresponding to a process that receives the data flow. If the correlation type is file md5, the second device may determine the correlated process call chain based on md5 in a correlation value field. If the correlation type is a file name, the second device may determine the correlated process call chain based on a file name in a correlation value field. If the correlation type is a command, the second device may determine the correlated process call chain based on a command in a correlation value field. If the correlation type is content, the second device may determine the correlated process call chain based on content in a correlation value field.

For example, the second device may establish a data provenance graph in real time based on a process call chain, a process operation file, a registry, a network, terminal alert data, and network device alert data. In addition, the second device may perform threat detection based on the provenance graph. A threat detection manner may include causal correlation rule matching, graph AI engine detection, and the like. Based on the threat detection, the second device can accurately discover an attack event in time and locate a threat entity.

In a second optional implementation, the first device may be a terminal device, and the second device may be a network device, for example, may be a firewall, a switch, or a router. The network device can determine correlated data that is correlated to the first device and that is in the second device, where the correlated data may include other alert data and/or log data of the first device. Then, the second device may perform threat detection and/or threat handling based on the alert data and the correlated data. For example, if the second device determines, based on threat detection, that the first device has been compromised, the second device may perform threat handling, for example, session blocking or host isolation, on the first device.

In the second implementation, as shown in FIG. 5, the second device can perform correlation analysis based on a unified asset, where the asset may refer to a terminal device. After performing correlation analysis based on the asset, the second device may determine other correlated data that is correlated to the first device and that is in the second device, and perform threat detection and/or threat handling based on received alert data and the determined correlated data. Because the second device obtains a large amount of data, high reliability of threat detection and/or threat handling can be ensured.

As described in step 102, the alert data encapsulated by the first device may include the class of the attack scenario, the confidence, the risk score, and the handling action, or may further include the rule number. The following describes functions of various types of alert data:

Class of the attack scenario: An attack behavior varies with different attack scenarios. For example, a main characteristic of ransomware is file encryption, and a manifested attack behavior is an abnormal file operation. A main characteristic of cryptomining is CPU computational power consumption, and a manifested attack behavior is abnormal CPU consumption. A main characteristic of the data exfiltration is outward transmission of sensitive privacy data. The second device may determine, based on the class of the attack scenario, a threat detection rule and model that need to be used during subsequent threat detection.

Confidence: It indicates reliability of alert determining. A value closer to 100 indicates more reliable alert determining. The second device may use the confidence in a threat detection process, that is, the confidence affects a subsequent threat detection result.

Risk score: The risk score indicates a risk level of a corresponding threat, and may affect a handling priority. For example, a risk score of the ransomware is higher than that of the cryptomining. In other words, the ransomware needs in-process handling compared with the cryptomining. In addition, risk scores set for different customers in a same attack scenario may be different. The second device may determine, by comprehensively considering the risk score and another indicator (for example, the confidence), whether to perform in-process handling on a threat.

Handling action: It indicates a way of handling performed by the first device on alerts. If the handling action is blocking, it indicates that the first device has sufficient evidence to prove that a data flow is malicious. The second device may determine, based on the handling action, whether to quickly handle an entity to which the alert data is correlated. For example, if the second device is the terminal device, and a handling action in the alert data encapsulated by the first device is blocking, the second device may quickly handle a process call chain to which the alert data is correlated.

Rule number: It is a logical identifier corresponding to a detection rule. Due to specificity of some vulnerability scenarios, rule numbers for these vulnerability scenarios are special during arrangement. For example, the rule numbers are limited to a specified range. In view of this, the second device may be aware of these special vulnerability exploitation scenarios based on the rule numbers, and may determine, based on the vulnerability exploitation scenarios, a detection rule required for subsequent threat detection. It may be understood that the rule number can resolve a problem of overly coarse granularity in classification of attack scenario classes.

Step 105: If the second device detects the threat entity based on the alert data, the second device sends a second handling policy to the first device.

Optionally, in this embodiment of this application, after the second device performs threat detection based on the alert data, if the second device detects the threat entity, the second device may further generate the second handling policy and send the second handling policy to the first device. The second handling policy may be to be executed by the first device.

For example, in the scenario 1 and the scenario 2 shown in FIG. 2, and the scenario 3 in which the first device is the network device, the second handling policy sent by the second device may include: blocking a source IP address of the data flow, and/or performing host isolation on the second device. In the scenario 3, when the first device is the terminal device and the second device is the network device, the second handling policy may include: host isolation and/or a collaborative detection policy. The collaborative detection policy is to be executed by the first device, so that the second device can collaborate with the first device, to detect and eradicate the threat entity in the first device.

Step 106: The first device executes the second handling policy.

Optionally, if the first device receives the second handling policy sent by the second device, the first device may further execute the second handling policy to effectively block a network attack behavior. For example, in the scenario 1 and the scenario 2 shown in FIG. 2, and the scenario 3 in which the first device is the network device, the first device may block the source IP address of the data flow, and/or perform host isolation on the second device. When the first device is the terminal device in the scenario 3, the first device may perform host isolation, and/or execute a collaborative detection policy delivered by the second device, so that the second device can detect and eradicate the threat entity in the first device.

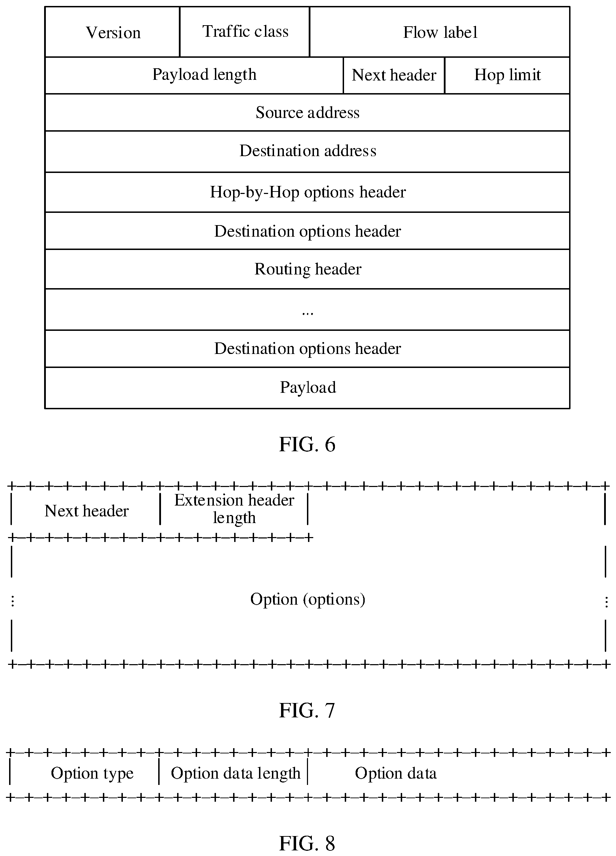

The following describes a manner of encapsulating alert data into a packet. In this embodiment of this application, the first device may encapsulate the alert data into an IPv6 packet. As shown in FIG. 6, the IPv6 packet includes the following fields: version (version), traffic class (traffic class), flow label (flow label), payload length (payload length), next header (next header), hop limit (hop limit), source address (source address), destination address (destination address), hop-by-hop options header (hop-by-hop options header), DOH, routing header (routing header), payload, and the like. The first device may include the alert data in an extension header of the IPv6 packet.

In this embodiment of this application, the extension header may be a DOH. As shown in FIG. 7, the DOH may include a next header (next header) field, an extension header length (extension header length) field, and an options (options) field. As shown in FIG. 8, the options field may include an option type (option type) field, an option data length (option data length) field, and an option data (option data) field. A value of the option type field may be an unoccupied value. The option data length may be determined based on content of the alert data, and is four-byte aligned. First 64 bits of the option data field may be fixed-length content, and a data length of a correlation value may be determined based on a value of a correlation value length (correlate_value length) field.

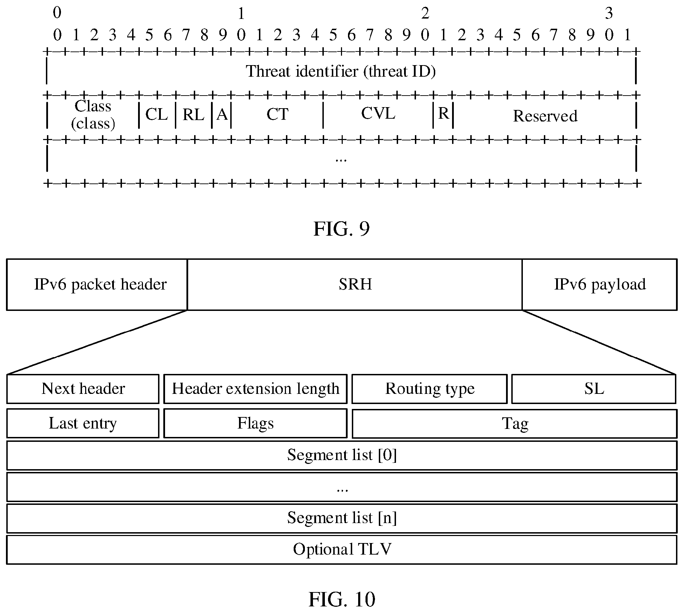

For a data format of the option data field, refer to FIG. 9. As shown in FIG. 9, the option data field may include a 32-bit threat identifier field, a 5-bit class (class) field, a 2-bit confidence level (confidence level, CL) field, a 2-bit risk level (risk level, RL) field, a 1-bit handling action (action, A) field, and a 5-bit correlation type (correlate_type, CT) field, a 6-bit correlation value length (correlate_value length, CVL) field, a 1-bit handling policy (response, R) field, and a reserved (reserved) field. If a value of the CVL field is not 0, the reserved field may be followed by a correlation value field for storing a correlation value. The class field is used to carry a class of an attack scenario, the R field is used to carry a first handling policy, the CL field is used to carry a level of the confidence, and the RL field is used to carry a level of the risk score. The first device encapsulates the level of the confidence and the level of the risk score into the packet, to effectively reduce a quantity of transmitted bytes.

The foregoing encapsulation format of the alert data is merely an example. It may be understood that a type of information included in the alert data encapsulated in the packet, a quantity of bits occupied by each type of information, organization and arrangement of each type of information, and the like may be set as required. This is not limited in this embodiment of this application.

It may be understood that, if the second device is the terminal device and is a destination node of a packet, the second device may directly obtain and process the alert data encapsulated in the DOH. If the second device is the network device, the IPv6 packet may further include an SRH. That is, the IPv6 packet may be a segment routing IPv6 (segment routing based on IPv6, SRv6) packet. In addition, a segment list of the SRH may include a SID of the second device, and the SID indicates the second device to obtain and process the alert data encapsulated in the DOH.

As shown in FIG. 10, the SRv6 packet may include an IPv6 packet header, the SRH, and an IPv6 payload. The SRH includes the following fields: next header, header extension length (header extension length, Hdr Ext Len), routing type (routing type), segment left (segment left, SL) quantity, last entry (last entry), flags (flags), tag (tag), segment list, and optional TLV. The segment list includes a total of n+1 identifier fields (where n may be an integer greater than or equal to 1) from a segment list [0] to a segment list [n]. Each identifier field is used to carry a SID of one node in a packet forwarding path. The SID may be an IPv6 address of the node. The SL field in the SRH may be used to index the segment list, and is in a descending order starting from a current value, until the SL reaches 0, indicating an end of a forwarding path defined by the segment list. A node that does not support SRv6 can function as transit (transit) node and perform forwarding based on the IPv6.

In this embodiment of this application, an SRv6 path orchestration capability may be used to specify one or more nodes (that is, a network device) on a path through which the packet passes, to obtain and process alert information in the DOH. For example, a network device indicated by each SID in the segment list can obtain and process the alert data in the DOH, to quickly block a threat.

Optionally, in the foregoing step 102, the first device may encapsulate the alert data into the packet and send the packet to the second device after detecting that the alert event and the data flow meet a collaborative handling condition. Correspondingly, if the alert data and the data flow do not meet the collaborative handling condition, the firstdevice does not need to send the alert data to the second device by using the packet, that is, does not need to collaborate with the second device. The collaborative handling condition may include a first condition and a second condition. The collaborative handling condition is set, so that device and system performance can be prevented from being affected by frequently sending alert data by the first device.

In a first possible example, the first condition may include: A source address of the data flow belongs to an untrusted zone. That is, the data flow comes from the untrusted zone. The second condition may include at least one of the following conditions:

The alert event is suspicious file type inconsistency;
the alert event is a suspicious alert event, where confidence of the alert event is higher than a first threshold, and the data flow includes an executable file; and
the alert event is a suspicious attack and intrusion event, where confidence of the alert event is higher than a second threshold.

The first threshold may be less than the second threshold. For example, the first threshold may be 70, the second threshold may be 80, and the executable file may include an EXE file, a DLL file, a PHP file, and the like.

In a second possible example, the first condition may include: Both a source address and a destination address of the data flow belong to a trusted zone. The second condition may include: The alert event is suspicious SMB sharing, suspicious high-risk vulnerability exploitation, or suspicious RDP desktop transmission, where confidence of the alert event is higher than a third threshold. The third threshold may be greater than the first threshold. For example, the third threshold may be 80.

In a third possible example, the first condition may include: A source address of the data flow belongs to a trusted zone, and a destination address of the data flow belongs to an untrusted zone. The second condition may include at least one of the following conditions:

The alert event is a malicious domain connection, malicious C&C communication, or malicious file download, where confidence of the alert event is higher than a fourth threshold;
the alert event is a suspicious DGA request, suspicious C&C communication, or suspicious file download, where confidence of the alert event is higher than a fifth threshold;
a process or a parent process that initiates the data flow is a suspicious process; and
the alert event is a suspicious abnormal connection event caused by successful vulnerability exploitation, where confidence of the alert event is higher than a sixth threshold.

The fourth threshold may be a threshold corresponding to a blocking alert. For example, the fourth threshold may be 95. Both the fifth threshold and the sixth threshold may be less than the fourth threshold. For example, the fifth threshold may be 75, and the sixth threshold may be 70 or 75.

It can be learned based on the first conditions in the foregoing three examples that the first example may be applied to the scenario 1 shown in FIG. 2, namely, the attack and intrusion scenario. The second example may be applied to the scenario 2 shown in FIG. 2, namely, the internal network lateral movement scenario. The third example may be applied to the scenario 3 shown in FIG. 2, namely, the compromised external communication scenario. According to the method provided in this embodiment of this application, different collaborative handling conditions are designed for different attack scenarios, so that impact on device and system performance can be minimized while network security is ensured.

It may be understood that a sequence of the steps of the alert method provided in this embodiment of this application may be appropriately adjusted, and the steps may be correspondingly added or reduced as required. For example, step 105 and step 106 may be deleted as required.

In conclusion, this embodiment of this application provides an alert method. After detecting the alert event based on the data flow that passes through the first device, the first device can encapsulate the alert data of the alert event into the packet, and send the packet to the second device through which the data flow passes. The flow identifier of the packet is consistent with the flow identifier of the data flow. After receiving the packet, the second device can perform threat detection and/or threat handling based on the alert data. In this way, the first device and the second device implement collaborative detection and/or handling on the threat entity. In addition, the first device can directly encapsulate the alert data into the packet and deliver the packet to the second device, that is, the alert data does not need to be detoured to a cloud platform for processing. Therefore, this effectively shortens time consumed for the threat detection and/or handling, can ensure to block a network attack, and can reduce a waste of compute resource wastes of the cloud platform. For example, the method provided in this embodiment of this application can effectively mitigate impact caused by network attack behaviors such as ransomware, cryptomining, data exfiltration, lateral movement, and a DDOS, and win time for complete attack fixing.

An embodiment of this application further provides an alert system. As shown in FIG. 1, FIG. 2, FIG. 4, and FIG. 5, the alert system may include a first device and a second device. The first device and the second device may implement the alert method provided in the foregoing method embodiments. To be specific, the first device and the second device may collaborate to perform threat detection and/or threat handling.

Optionally, still refer to FIG. 1, FIG. 4, and FIG. 5. The alert system may further include a cloud platform. As shown in FIG. 4 and FIG. 5, the second device may include an event management module. The event management module can send, to the cloud platform for processing, a result of threat handling performed by the second device based on alert data. In addition, the second device may further send, to the cloud platform, a threat detection result (for example, alert data generated by the second device), and/or data correlated to alert data sent by the first device (for example, a process call chain or correlated data). The first device may further send the alert data to the cloud platform. If the first device is a network device, the first device may further send metadata of a data flow and/or network log data to the cloud platform. If the first device is a terminal device, the first device may further send terminal log data to the cloud platform.

The cloud platform may perform threat analysis based on the received data, and deliver a handling policy to the first device and the second device, for the first device and the second device to execute. For example, the cloud platform may perform unified modeling and analysis on the received plurality of types of data, to discover an advanced convert attack, and locate a compromised host (that is, a compromised terminal device) and a corresponding threat entity. Then, the cloud platform may deliver a handling policy like host isolation and/or host access range restriction to a corresponding network device for execution, and deliver a handling policy like process killing, file isolation, account deletion, and/or host micro-segmentation to a terminal device corresponding to the attack for execution.

Optionally, the cloud platform may further display the received data in a visualized manner, and may further display a threat analysis result of the cloud platform and the delivered handling policy in a visualized manner.

It may be understood that, in the alert system, the first device and the second device collaborate to perform threat detection, to effectively detect and handle most threat entities in a network. Further, the first device and the second device may further report data to the cloud platform, and the cloud platform performs further threat analysis, so that missing detection of a threat entity can be effectively avoided. For example, the cloud platform may detect an advanced convert attack that cannot be detected by the first device and the second device through collaborative detection. Compared with a case in which the first device and the second device directly report data to the cloud platform without collaboration, that is, only the cloud platform performs unified modeling and analysis, the solutions provided in this embodiment of this application can effectively reduce a waste of cloud computing resources.

The network device, the terminal device, and the cloud platform may include a plurality of functional modules, to implement the foregoing methods. The following describes functional modules included in the network device, the terminal device, and the cloud platform by using examples. As shown in Table 1, the network device may include an intrusion prevention engine and a policy module. The terminal device may include a traffic analysis engine, a data collection engine, a threat detection engine, and a threat handling module. The cloud platform may include a threat analysis module and a threat handling module.

**Table 1**

| Device | Module name | Function descriptions |
|---|---|---|
| Network device | Intrusion prevention engine | Parses and decrypts a received data flow, detects the data flow in real time based on IPS rule matching, AI model prediction, and/or threat intelligence matching, and generates alert data. |
| | Policy module | Matches and executes a handling policy, for example, blocks a data flow, encapsulates alert data into a packet for forwarding, or uploads alert data and original logs to a cloud platform. |
| Terminal device | Traffic analysis engine | Similar to the intrusion prevention engine, is used to parse and detect a received or sent data flow and perform threat handling on a malicious flow, for example, detects suspicious lateral movement between terminal devices. |
| | Data collection engine | Collects various data required for threat analysis in real time, for example, process creation, file operation, registry operation, network operation, login authentication data, API invoking data, and stack data; and |
| | | receives a packet sent by the network device or the terminal device, parses alert data from the packet, and correlates the alert data to a process call chain. |
| | Threat detection engine | Establishes a data provenance graph in real time by using terminal and network alert data based on a process call relationship, a process operation file, a registry, a network, and the like, and performs threat analysis based on the provenance graph, to discover an attack event and locate a threat entity, where a threat analysis manner includes causal correlation rule matching, graph AI engine, and the like. |
| | Threat handling | Performs handling on the threat entity, including process killing, file isolation, infected file recovery, and host micro-segmentation on the terminal device. |
| Cloud platform | Threat analysis | Performs unified modeling and analysis on a plurality of types of data, such as a network alert, a terminal alert, network original logs, terminal original logs, and threat intelligence, to discover an advanced convert attack and locate a host and a corresponding threat entity. |
| | Threat handling | Delivers a handling policy like host isolation and host access range restriction to a corresponding network device for execution, and delivers a handling policy like process killing, file isolation, account deletion, and host micro-segmentation to a terminal device corresponding to an attack for execution. |

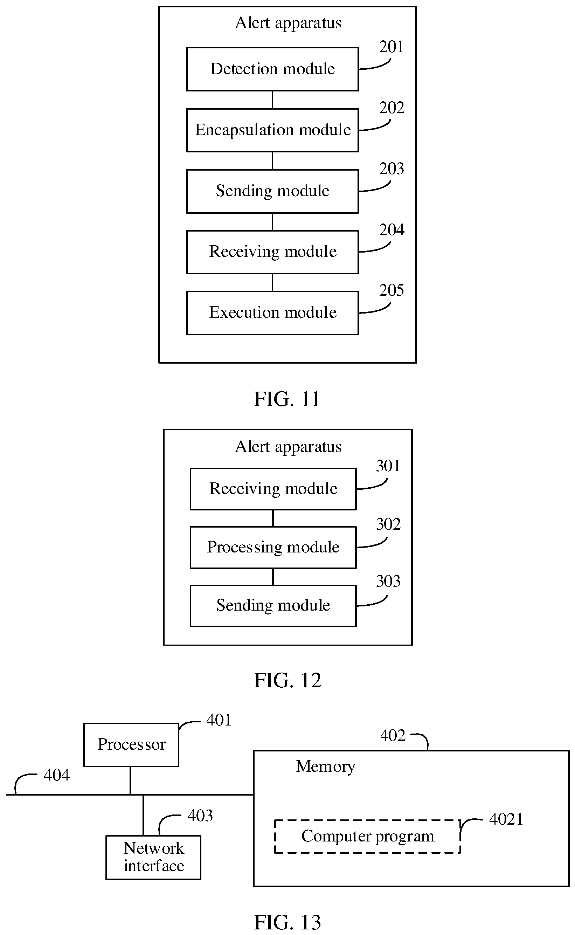

An embodiment of this application further provides an alert apparatus. The alert apparatus may be used in the first device in the application scenario shown in FIG. 1, FIG. 2, FIG. 4, or FIG. 5, and may be configured to implement the steps performed by the first device in the foregoing method embodiments. As shown in FIG. 11, the alert apparatus includes the following:

A detection module 201 is configured to perform threat detection on a data flow that passes through the first device. For an implementation of a function of the detection module 201, refer to related descriptions of step 101 in the foregoing method embodiment. If the first device is a network device, for a function of the detection module 201, refer to function descriptions of the intrusion prevention engine in Table 1. If the first device is a terminal device, for a function of the detection module 201, refer to function descriptions of the traffic analysis engine in Table 1.

An encapsulation module 202 is configured to encapsulate alert data of an alert event into a packet if the alert event is detected based on the threat detection, where a flow identifier of the packet is consistent with a flow identifier of the data flow. For an implementation of a function of the encapsulation module 202, refer to related descriptions of step 102 in the foregoing method embodiment, and refer to function descriptions of the policy module in Table 1.

A sending module 203 is configured to send the packet to a second device through which the data flow passes, where the alert data in the packet is used by the second device to perform threat detection and/or threat handling. For an implementation of a function of the sending module 203, refer to related descriptions of step 103 in the foregoing method embodiment.

Optionally, the packet belongs to the data flow, or the packet is a packet in a reverse data flow of the data flow.

Optionally, if the data flow passes from the first device through the second device, the packet belongs to the data flow; or if the data flow passes from the second device through the first device, the packet is the packet in the reverse data flow of the data flow.

Optionally, the packet in the reverse data flow is a response packet of the packet in the data flow.

Optionally, the response packet may be received by the first device, or the response packet may be generated by the first device.

Optionally, the first device is a network device, and the second device is a terminal device; both the first device and the second device are terminal devices; or the first device is a terminal device, and the second device is a network device.

Optionally, if the first device is the network device, the data flow may be received by the first device; or if the first device is the terminal device, the data flow may be received or initiated by the first device.

Optionally, the alert data may include at least one of the following data: a class of an attack scenario of the alert event; confidence of the alert event; a risk score of the attack scenario; a handling action performed by the first device on the alert event; a rule number of a detection rule for detecting the alert event; a first handling policy to be executed by the second device; a correlation type, where the correlation type indicates a manner of correlating the alert data to a process call chain of the second device; and a correlation value corresponding to the correlation type.

Optionally, the packet may be an IPv6 packet, and the alert data is encapsulated in a DOH of the IPv6 packet.

Optionally, if the second device is the network device, the IPv6 packet may further include an SRH, a segment list of the SRH includes a SID of the second device, and the SID indicates the second device to obtain alert data in the DOH.

Optionally, the encapsulation module 202 may be configured to encapsulate the alert data of the alert event into the packet if the first device detects the alert event based on the threat detection, and the data flow and the alert event meet a collaborative handling condition.

Optionally, the collaborative handling condition includes a first condition and a second condition. The first condition includes: A source address of the data flow belongs to an untrusted zone. The second condition includes at least one of the following conditions:

The alert event is suspicious file type inconsistency;
the alert event is a suspicious alert event, where confidence of the alert event is higher than a first threshold, and the data flow includes an executable file; and
the alert event is a suspicious attack and intrusion event, where confidence of the alert event is higher than a second threshold.

Optionally, the collaborative handling condition includes a first condition and a second condition. The first condition includes: Both a source address and a destination address of the data flow belong to a trusted zone. The second condition includes: The alert event is suspicious SMB sharing, suspicious high-risk vulnerability exploitation, or suspicious RDP desktop transmission, where confidence of the alert event is higher than a third threshold.

Optionally, the collaborative handling condition includes a first condition and a second condition. The first condition includes: A source address of the data flow belongs to a trusted zone, and a destination address of the data flow belongs to an untrusted zone. The second condition includes at least one of the following conditions:

The alert event is a malicious domain connection, malicious C&C communication, or malicious file download, where confidence of the alert event is higher than a fourth threshold;
the alert event is a suspicious domain generation algorithm DGA request, suspicious C&C communication, or suspicious file download, where confidence of the alert event is higher than a fifth threshold;
a process or a parent process that initiates the data flow is a suspicious process; and
the alert event is a suspicious abnormal connection event caused by successful vulnerability exploitation, where confidence of the alert event is higher than a sixth threshold.

Optionally, as shown in FIG. 11, the apparatus may further include the following:

A receiving module 204 is configured to receive a second handling policy sent by the second device, where the second handling policy is generated after the second device detects a threat entity based on the alert data. For an implementation of a function of the receiving module 204, refer to related descriptions of step 105 in the foregoing method embodiment.

An execution module 205 is configured to execute the second handling policy. For an implementation of a function of the execution module 205, refer to related descriptions of step 106 in the foregoing method embodiment.

In conclusion, an embodiment of this application provides an alert apparatus, which is used in the first device. After detecting the alert event based on the data flow that passes through the first device, the apparatus can encapsulate the alert data of the alert event into the packet, and send the packet to the second device through which the data flow passes. A flow identifier of the packet is consistent with a flow identifier of the data flow. After receiving the packet, the second device can perform threat detection and/or threat handling based on the alert data. In this way, the first device and the second device implement collaborative detection and/or handling on the threat entity. In addition, the apparatus can directly encapsulate the alert data into the packet and deliver the packet to the second device, that is, the alert data does not need to be detoured to a cloud platform for processing. Therefore, this effectively shortens time consumed for the threat detection and/or handling, and can ensure to block network attacks in time.

An embodiment of this application further provides another alert apparatus. The alert apparatus may be used in the second device in the application scenario shown in FIG. 1, FIG. 2, FIG. 4, or FIG. 5, and may be configured to implement the steps performed by the second device in the foregoing method embodiments. As shown in FIG. 12, the alert apparatus includes the following:

A receiving module 301 is configured to receive a packet from a first device, where alert data is encapsulated in the packet, and the alert data is obtained by the first device by performing threat detection on a data flow that passes through the first device. The data flow further passes through the second device, and a flow identifier of the packet is consistent with a flow identifier of the data flow. For an implementation of a function of the receiving module 301, refer to related descriptions of step 103 in the foregoing method embodiment. If the second device is a terminal device, for a function of the receiving module 301, refer to the function descriptions of the data collection engine in Table 1.

A processing module 302 is configured to perform threat detection and/or threat handling based on the alert data. For an implementation of a function of the processing module 302, refer to related descriptions of step 104 in the foregoing method embodiment. If the second device is a terminal device, for a function of the processing module 302, refer to the function descriptions of the data collection engine, the threat detection engine, and the threat handling engine in Table 1.

Optionally, the second device is a terminal device, and the processing module 302 may be configured to: determine a process call chain that is in the second device and that is correlated to the alert data; and perform threat detection and/or threat handling based on the process call chain.

Optionally, the alert data includes a correlation type, and the processing module 302 may be configured to determine, based on the correlation type, a process call chain that is in the second device and that is correlated to the alert data.

Optionally, the second device is a network device, and the first device is a terminal device. The processing module 302 may be configured to: determine correlated data that is in the second device and that is correlated to the first device, where the correlated data includes other alert data and/or log data; and perform threat detection and/or threat handling based on the alert data and the correlated data.

Optionally, the alert data may include a first handling policy, and the processing module 302 may be further configured to execute the first handling policy.

Optionally, as shown in FIG. 12, the apparatus may further include:
a sending module 303, configured to send a second handling policy to the first device if the processing module 302 detects a threat entity based on the alert data, where the second handling policy is to be executed by the first device. For an implementation of a function of the sending module 303, refer to related descriptions of step 105 in the foregoing method embodiment.

In conclusion, an embodiment of this application provides an alert apparatus, which is used in the second device. The alert data is encapsulated in the packet that is sent by the first device and that is received by the apparatus, and the apparatus can perform threat detection and/or threat handling based on the alert data. In this way, the first device and the second device implement collaborative detection and/or handling on the threat entity. In addition, the alert data does not need to be detoured to a cloud platform for processing. Therefore, this effectively shortens time consumed for the threat detection and/or handling, and can ensure to block network attacks in time.

It may be clearly understood by a person skilled in the art that, for the purpose of convenient and brief description, for a detailed working process of the foregoing alert apparatus and various modules, refer to a corresponding process in the foregoing method embodiment. Details are not described herein again.

It should be understood that the alert apparatus provided in embodiments of this application may be further implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. In addition, the method provided in the foregoing method embodiments may also be implemented by using software. When the method provided in the foregoing method embodiments is implemented by using software, each functional module in the alert apparatus may also be a software module.

FIG. 13 is a diagram of a structure of still another alert apparatus according to an embodiment of this application. The alert apparatus may be the first device in the application scenario shown in FIG. 1, FIG. 2, FIG. 4, or FIG. 5, and may implement the steps performed by the first device in the foregoing method embodiments. Alternatively, the alert apparatus may be the second device in the application scenario shown in FIG. 1, FIG. 2, FIG. 4, or FIG. 5, and may implement the steps performed by the second device in the foregoing method embodiments. Refer to FIG. 13, the alert apparatus includes: a processor 401, a memory 402, a network interface 403, and a bus 404.

The memory 402 stores a computer program 4021, and the computer program 4021 is used to implement various application functions. The processor 401 is configured to execute the computer program 4021 to implement the alert method provided in the foregoing method embodiments. For example, the processor 401 may be configured to execute the computer program 4021 to implement functions of the modules shown in FIG. 11 or FIG. 12.

The processor 401 may be a central processing unit CPU, or the processor 401 may be another general-purpose processor, a digital signal processor (digital signal processor, DSP), an ASIC, an FPGA, a GPU or another programmable logic device, a discrete gate or a transistor logic device, a discrete hardware component, or the like. The general-purpose processor may be a microprocessor, any conventional processor, or the like.

The memory 402 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

There may be a plurality of network interfaces 403, and the network interface 403 is configured to implement a communication connection (which may be wired or wireless) to another device. The another device may be a device like a terminal, a server, or a VM.

The bus 404 is configured to connect the processor 401, the memory 402, and the network interface 403. In addition to a data bus, the bus 404 may further include a power bus, a control bus, a status signal bus, and the like. However, for the purpose of clear descriptions, various buses are all marked as the bus 404 in the drawings.

An embodiment of this application further provides a computer-readable storage medium. The computer-readable storage medium stores instructions. When the instructions are run on a processor, the processor is enabled to perform the steps performed by a host or an acceleration chip in the foregoing method embodiments.

An embodiment of this application further provides a computer program product including instructions. When the instructions are run on a processor, the processor is enabled to perform the steps performed by a host or an acceleration chip in the foregoing method embodiments.

In embodiments of this application, the terms "first", "second", and "third" are merely used for description, but shall not be understood as an indication or implication of relative importance. In embodiments of this application, the term "at least one" indicates one or more, and "a plurality of" indicates two or more. The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An alert method, wherein the method comprises:
performing, by a first device, threat detection on a data flow that passes through the first device;
encapsulating, by the first device, alert data of an alert event into a packet if the alert event is detected based on the threat detection, wherein a flow identifier of the packet is consistent with a flow identifier of the data flow; and
sending, by the first device, the packet to a second device through which the data flow passes, wherein the alert data in the packet is used by the second device to perform threat detection and/or threat handling.

2. The method according to claim 1, wherein the packet belongs to the data flow, or the packet is a packet in a reverse data flow of the data flow.

3. The method according to claim 2, wherein if the data flow passes from the first device through the second device, the packet belongs to the data flow; or
if the data flow passes from the second device through the first device, the packet is the packet in the reverse data flow of the data flow.

4. The method according to claim 2 or 3, wherein the packet in the reverse data flow is a response packet of the packet in the data flow.

5. The method according to claim 4, wherein the response packet is received by the first device, or the response packet is generated by the first device.

6. The method according to any one of claims 1 to 5, wherein the first device is a network device, and the second device is a terminal device;
both the first device and the second device are terminal devices; or
the first device is a terminal device, and the second device is a network device.

7. The method according to any one of claims 1 to 6, wherein if the first device is the network device, the data flow is received by the first device; or
if the first device is the terminal device, the data flow is received or initiated by the first device.

8. The method according to any one of claims 1 to 7, wherein the alert data comprises at least one of the following data:
a class of an attack scenario of the alert event;
confidence of the alert event;
a risk score of the attack scenario;
a handling action performed by the first device on the alert event;
a rule number of a detection rule for detecting the alert event;
a first handling policy to be executed by the second device;
a correlation type, wherein the correlation type indicates a manner of correlating the alert data to a process call chain of the second device; and
a correlation value corresponding to the correlation type.

9. The method according to any one of claims 1 to 8, wherein the packet is an internet protocol version 6 IPv6 packet, and the alert data is encapsulated in a destination options header DOH of the IPv6 packet.

10. The method according to claim 9, wherein if the second device is the network device, the IPv6 packet further comprises a segment routing header SRH, a segment list of the SRH comprises a segment identifier SID of the second device, and the SID indicates the second device to obtain the alert data in the DOH.

11. The method according to any one of claims 1 to 10, wherein encapsulating, by the first device, the alert data of the alert event into the packet if the alert event is detected based on the threat detection comprises:
encapsulating, by the first device, the alert data of the alert event into the packet if the alert event is detected based on the threat detection, and the data flow and the alert event meet a collaborative handling condition.

12. The method according to claim 11, wherein the collaborative handling condition comprises a first condition and a second condition, wherein
the first condition comprises: a source address of the data flow belongs to an untrusted zone; and
the second condition comprises at least one of the following conditions:
the alert event is suspicious file type inconsistency;
the alert event is a suspicious alert event, wherein confidence of the alert event is higher than a first threshold, and the data flow comprises an executable file; and
the alert event is a suspicious attack and intrusion event, wherein confidence of the alert event is higher than a second threshold.

13. The method according to claim 11, wherein the collaborative handling condition comprises a first condition and a second condition, wherein
the first condition comprises: both a source address and a destination address of the data flow belong to a trusted zone; and
the second condition comprises: the alert event is suspicious service message block SMB sharing, suspicious high-risk vulnerability exploitation, or suspicious remote desktop protocol RDP desktop transmission, wherein confidence of the alert event is higher than a third threshold.

14. The method according to claim 11, wherein the collaborative handling condition comprises a first condition and a second condition, wherein
the first condition comprises: a source address of the data flow belongs to a trusted zone, and a destination address of the data flow belongs to an untrusted zone; and
the second condition comprises at least one of the following conditions:
the alert event is a malicious domain connection, malicious command and control communication, or malicious file download, wherein confidence of the alert event is higher than a fourth threshold;
the alert event is a suspicious domain generation algorithm DGA request, suspicious command and control communication, or suspicious file download, wherein confidence of the alert event is higher than a fifth threshold;
a process or a parent process that initiates the data flow is a suspicious process; and
the alert event is a suspicious abnormal connection event caused by successful vulnerability exploitation, wherein confidence of the alert event is higher than a sixth threshold.

15. The method according to any one of claims 1 to 14, wherein the method further comprises:
receiving, by the first device, a second handling policy sent by the second device, wherein the second handling policy is generated after the second device detects a threat entity based on the alert data; and
executing, by the first device, the second handling policy.

16. An alert method, wherein the method comprises:
receiving, by a second device, a packet from a first device, wherein alert data is encapsulated in the packet, the alert data is obtained by the first device by performing threat detection on a data flow that passes through the first device, the data flow further passes through the second device, and a flow identifier of the packet is consistent with a flow identifier of the data flow; and
performing, by the second device, threat detection and/or threat handling based on the alert data.

17. The method according to claim 16, wherein the second device is a terminal device, and performing, by the second device, threat detection and/or threat handling based on the alert data comprises:
determining, by the second device, a process call chain that is in the second device and that is correlated to the alert data; and
performing, by the second device, threat detection and/or threat handling based on the process call chain.

18. The method according to claim 17, wherein the alert data comprises a correlation type, and determining, by the second device, the process call chain that is in the second device and that is correlated to the alert data comprises:
determining, by the second device based on the correlation type, the process call chain that is in the second device and that is correlated to the alert data.

19. The method according to claim 16, wherein the second device is a network device, the first device is a terminal device, and performing, by the second device, threat detection and/or threat handling based on the alert data comprises:
determining, by the second device, correlated data that is in the second device and that is correlated to the first device, wherein the correlated data comprises other alert data and/or log data; and
performing, by the second device, threat detection and/or threat handling based on the alert data and the correlated data.

20. The method according to any one of claims 16 to 19, wherein the alert data comprises a first handling policy, and the method further comprises:
executing, by the second device, the first handling policy.

21. The method according to any one of claims 16 to 20, wherein the method further comprises:
sending, by the second device, a second handling policy to the first device if a threat entity is detected based on the alert data, wherein the second handling policy is to be executed by the first device.

22. An alert apparatus, used in a first device, wherein the apparatus comprises:
a detection module, configured to perform threat detection on a data flow that passes through the first device;
an encapsulation module, configured to encapsulate alert data of an alert event into a packet if the alert event is detected based on the threat detection, wherein a flow identifier of the packet is consistent with a flow identifier of the data flow; and
a sending module, configured to send the packet to a second device through which the data flow passes, wherein the alert data in the packet is used by the second device to perform threat detection and/or threat handling.

23. The apparatus according to claim 22, wherein the packet belongs to the data flow, or the packet is a packet in a reverse data flow of the data flow.

24. The apparatus according to claim 23, wherein if the data flow passes from the first device through the second device, the packet belongs to the data flow; or
if the data flow passes from the second device through the first device, the packet is the packet in the reverse data flow of the data flow.

25. The apparatus according to claim 23 or 24, wherein the packet in the reverse data flow is a response packet of the packet in the data flow.

26. The apparatus according to claim 25, wherein the response packet is received by the first device, or the response packet is generated by the first device.

27. The apparatus according to any one of claims 22 to 26, wherein the first device is a network device, and the second device is a terminal device;
both the first device and the second device are terminal devices; or
the first device is a terminal device, and the second device is a network device.

28. The apparatus according to any one of claims 22 to 27, wherein if the first device is the network device, the data flow is received by the first device; or
if the first device is the terminal device, the data flow is received or initiated by the first device.

29. The apparatus according to any one of claims 22 to 28, wherein the alert data comprises at least one of the following data:
a class of an attack scenario of the alert event;
confidence of the alert event;
a risk score of the attack scenario;
a handling action performed by the first device on the alert event;
a rule number of a detection rule for detecting the alert event;
a first handling policy to be executed by the second device;
a correlation type, wherein the correlation type indicates a manner of correlating the alert data to a process call chain of the second device; and
a correlation value corresponding to the correlation type.

30. The apparatus according to any one of claims 22 to 29, wherein the packet is an internet protocol version 6 IPv6 packet, and the alert data is encapsulated in a destination options header DOH of the IPv6 packet.

31. The apparatus according to claim 30, wherein if the second device is the network device, the IPv6 packet further comprises a segment routing header SRH, a segment list of the SRH comprises a segment identifier SID of the second device, and the SID indicates the second device to obtain the alert data in the DOH.

32. The apparatus according to any one of claims 22 to 31, wherein the encapsulation module is configured to:
encapsulate, by the first device, the alert data of the alert event into the packet if the alert event is detected based on the threat detection, and the data flow and the alert event meet a collaborative handling condition.

33. The apparatus according to claim 32, wherein the collaborative handling condition comprises a first condition and a second condition, wherein
the first condition comprises: a source address of the data flow belongs to an untrusted zone; and
the second condition comprises at least one of the following conditions:
the alert event is suspicious file type inconsistency;
the alert event is a suspicious alert event, wherein confidence of the alert event is higher than a first threshold, and the data flow comprises an executable file; and
the alert event is a suspicious attack and intrusion event, wherein confidence of the alert event is higher than a second threshold.

34. The apparatus according to claim 32, wherein the collaborative handling condition comprises a first condition and a second condition, wherein
the first condition comprises: both a source address and a destination address of the data flow belong to a trusted zone; and
the second condition comprises: the alert event is suspicious service message block SMB sharing, suspicious high-risk vulnerability exploitation, or suspicious remote desktop protocol RDP desktop transmission, wherein confidence of the alert event is higher than a third threshold.

35. The apparatus according to claim 32, wherein the collaborative handling condition comprises a first condition and a second condition, wherein
the first condition comprises: a source address of the data flow belongs to a trusted zone, and a destination address of the data flow belongs to an untrusted zone; and
the second condition comprises at least one of the following conditions:
the alert event is a malicious domain connection, malicious command and control communication, or malicious file download, wherein confidence of the alert event is higher than a fourth threshold;
the alert event is a suspicious domain generation algorithm DGA request, suspicious command and control communication, or suspicious file download, wherein confidence of the alert event is higher than a fifth threshold;
a process or a parent process that initiates the data flow is a suspicious process; and
the alert event is a suspicious abnormal connection event caused by successful vulnerability exploitation, wherein confidence of the alert event is higher than a sixth threshold.

36. The apparatus according to any one of claims 22 to 35, wherein the apparatus further comprises:
a receiving module, configured to receive a second handling policy sent by the second device, wherein the second handling policy is generated after the second device detects a threat entity based on the alert data; and
an execution module, configured to execute the second handling policy.

37. An alert apparatus, used in a second device, wherein the apparatus comprises:
a receiving module, configured to receive a packet from a first device, wherein alert data is encapsulated in the packet, the alert data is obtained by the first device by performing threat detection on a data flow that passes through the first device, the data flow further passes through the second device, and a flow identifier of the packet is consistent with a flow identifier of the data flow; and
a processing module, configured to perform threat detection and/or threat handling based on the alert data.

38. The apparatus according to claim 37, wherein the second device is a terminal device, and the processing module is configured to:
determine a process call chain that is in the second device and that is correlated to the alert data; and
perform threat detection and/or threat handling based on the process call chain.

39. The apparatus according to claim 38, wherein the alert data comprises a correlation type; and the processing module is configured to:
determine, based on the correlation type, the process call chain that is in the second device and that is correlated to the alert data.

40. The apparatus according to claim 37, wherein the second device is a network device, the first device is a terminal device, and the processing module is configured to:
determine correlated data that is in the second device and that is correlated to the first device, wherein the correlated data comprises other alert data and/or log data; and
perform threat detection and/or threat handling based on the alert data and the correlated data.

41. The apparatus according to any one of claims 37 to 40, wherein the alert data comprises a first handling policy, and the processing module is further configured to execute the first handling policy.

42. The apparatus according to any one of claims 37 to 41, wherein the apparatus further comprises:
a sending module, configured to send a second handling policy to the first device if the processing module detects a threat entity based on the alert data, wherein the second handling policy is to be executed by the first device.

43. An alert apparatus, comprising a memory and a processor, wherein the processor is configured to execute instructions stored in the memory, to implement the methods according to any one of claims 1 to 21.

44. A computer-readable storage medium, wherein the computer-readable storage medium stores a computer program, and when the computer program is executed, the methods according to any one of claims 1 to 21 are implemented.

45. A computer program product, wherein the computer program product comprises a program or code, and when the program or the code is executed, the methods according to any one of claims 1 to 21 are implemented.

46. An alert system, wherein the system comprises a first device and a second device, the first device is configured to perform the method according to any one of claims 1 to 15, and the second device is configured to perform the method according to any one of claims 16 to 21.
